# EUROPÄISCHE PATENTSCHRIFT

(11) **EP 2 070 575 B1**
(45) Veröffentlichungstag und Bekanntmachung des Hinweises auf die Patenterteilung: **30.05.2012**
(21) Anmeldenummer: 08167640.5
(22) Anmeldetag: 27.10.2008
(51) Int. Cl.: B01D 35/153, B01D 35/147, B01D 35/16

(54) **Ölfilter**
Oil filter
Filtre à huile

(30) Priorität: 14.12.2007 DE 202007017614 U
(43) Veröffentlichungstag der Anmeldung: 17.06.2009
(73) Patentinhaber: MANN+HUMMEL GmbH, 71638 Ludwigsburg (DE)
(72) Erfinder: Weindorf, Martin, 70806, Kornwestheim (DE)

(56) Entgegenhaltungen:
- EP-A- 1 216 740
- WO-A-2005/005014
- DE-A1-102004 038 814

## Beschreibung

### Technisches Gebiet

Die Erfindung betrifft einen Filter, insbesondere einen Öl- oder Kraftstofffilter für ein Kraftfahrzeug, nach Anspruch 1 und ein Filterelement für einen solchen Filter nach Anspruch 2.

### Stand der Technik

Bei stehenden Ölfiltern soll häufig das Filterelement mit dem Filterdeckel nach dem Abschrauben des Filterdeckels entnommen werden können. Hierfür wird das Filterelement häufig über Schnapphaken am Filterdeckel befestigt. Ein solches am Fitlerdeckel eingeschnapptes Filterelement ist z.B. aus der DE 29921168 bekannt. Die Schnapphaken des Filterdeckels müssen allerdings im motierten Betriebszustand vom Filterelement entkoppelt sein. Ansonsten würden axiale Bewegung des Deckels auf das Filterelement übertragen, was zu Reibung und Verschleiß an Dichtungsstellen des Filterelements führen kann. Hierdurch entsteht die Gefahr von Dichtungsverschleiß am Filterelement und somit die Gefahr einer interne Leckage von Roh- zu Reinseite oder in den Rücklauf zur Ölwanne. Im Extremfall kann hierdurch der Öldruck zusammenbrechen. Um dies zu vermeiden, sollte ein axiales und/oder radiales Spiel zwischen Filterelement und Filterdeckel vorgesehen sein. Dies kann jedoch nachteilig für die sichere Befestigungs- und Haltekraft der Schnappverbindung sein. Das axiale Spiel muss erst durch Aufschrauben des Deckels überbrückt werden. Insgesamt führt dies zu einem erhöhten Abstimmungsaufwand bei der Herstellung, damit eine noch ausreichende Haltekraft erreicht wird und die Beeinflussung des Filterelements durch Pulsation des Filterdeckels oder des Filtergehäuses vermieden wird.

Aus der EP 1 216 740 A1 ist ein Filteranordnung für Flüssigkeiten bekannt mit einem Filterelement, das während der Montage der Filteranordnung axial in ein Filtergehäuse einführbar ist. Das Filterelement bewirkt nach der Montage den Verschluss einer Rücklaufvorrichtung für die zu filternde Flüssigkeit mit mindestens einer Dichtung vor dem Rücklaufkanal. Die Rücklaufvorrichtung ist hierbei so gestaltet, dass im Verlauf des axialen Herauszeihens des Filterelements zunächst eine erste Dichtung für den Rücklauf der zu filternden Flüssigkeit freigebbar ist. im Verlauf des weiteren axialen Herauszeihens des Filterelements ist eine zweite Dichtung für den Rücklauf der gefilterten Flüssigkeit freigebbar.

Es ist daher ein stehender Filter wünschenswert, bei dem sich das Filterelement mit dem Filterdeckel aus dem Filtergehäuse nehmen lässt, der im Betrieb das Filterelement vom Filterdeckel entkoppelt und der günstig und einfach herrzustellen ist.

### Offenbarung der Erfindung

Die Aufgabe wird gelöst durch einen Flüssigkeitsfilter, insbesondere einen Ölfilter für ein Kraftfahrzeug, mit einem Filtergehäuse mit einem ersten Gewinde und einem Leerlaufkanal. Auf diesen Flüssigkeitsfilter wird ein Filterdeckel mit einem zweiten Gewinde aufgeschraubt. Am Filterdeckel ist ein Filterumgehungsventil zur Umgehung des Filterelements bei zu hohem Druckverlust beim Durchtritt der Flüssigkeit durch das Filtermedium des Filterelements angebracht, dieses Filterumgehungsventil kann alternativ auch am Filterelement oder verteilt auf Filterelement und Filterdeckel realisiert werden. Am Filterdeckel sind ersten Bajonettverbindungen angebracht. Das Filterelement hat ein Filtermedium, das Filterelement kann als Rundfilterelement mit einem sterngefalteten Faltenbalg ausgeführt sein. Zweite Bajonettverbindungen zur Befestigung des Filterelements am Filterdeckel sind am Filterelement angebracht. Die ersten und zweiten Bajonettverbindungen sind so aufeinander abgestimmt, dass das Filterelement in den Deckel eingesetzt werden kann, sodass die ersten Bajonettverbindungen mit den zweiten Bajonettverbindungen verriegeln. Die Bajonettverbindungen sind so ausgestaltet, dass sie sich beim Anschrauben des Filterdeckels zusammen mit dem über die Bajonettverbindungen befestigten Filterelement im Filterdeckel, lösen.

Zur Lösbarkeit der Bajonettverbindungen müssen diese leichtergängig sein als der Reibschluss durch eine doppelkonzentrische Dichtung zum Verschluss des Leerlaufkanals, die am Filterelement angebracht ist. Durch die Drehung rutschen dann die ersten Bajonettverbindungen des Filterdeckels aus den zweiten Bajonettverbindungen des Filterelements heraus und schlagen beim Weiterdrehen an den zweiten Bajonettverbindungen an, ohne sich hierbei wieder zu verbinden. Das Filterelement ist daher nach dem Einschrauben vom Filterdeckel entkoppelt.

Die Doppelkonzentrische Dichtung am Filterelement zum Leerlaufkanal des Filtergehäuses ist im Zusammenspiel mit den Wandungen des Leerlaufkanals so ausgebildet, dass der Kanal erst für die Seite der äußeren der Dichtungen und dann für die Seite der inneren der Dichtungen geöffnet wird. Dies kann z.B. durch unterschiedlich hohe Seitenwände außen und innen am Kanal oder durch unterschiedlich hohe Dichtungen realisiert werden.

### Kurze Beschreibung der Zeichnungen

Fig. 1 zeigt ein Filterelement verriegelt im Filterdeckel.

Fig. 2 zeigt ein im Gehäuse eingebautes Filterelement.

Fig. 3 a und b zeigen das Filterelement mit verriegelter bzw. entriegelter Bajonettverbindung.

Fig. 4 zeigt den Leerlaufkanal verschlossen durch die doppelkonzentrische Dichtung des Filterelements.

Fig. 5 zeigt ein im Filterdeckel verriegeltes Filterelement beim Ausbau aus dem Gehäuse.

Fig. 6 zeigt eine alternative Ausführungsform eines Filterumgehungsventils.

### Ausführungsform(en) der Erfindung

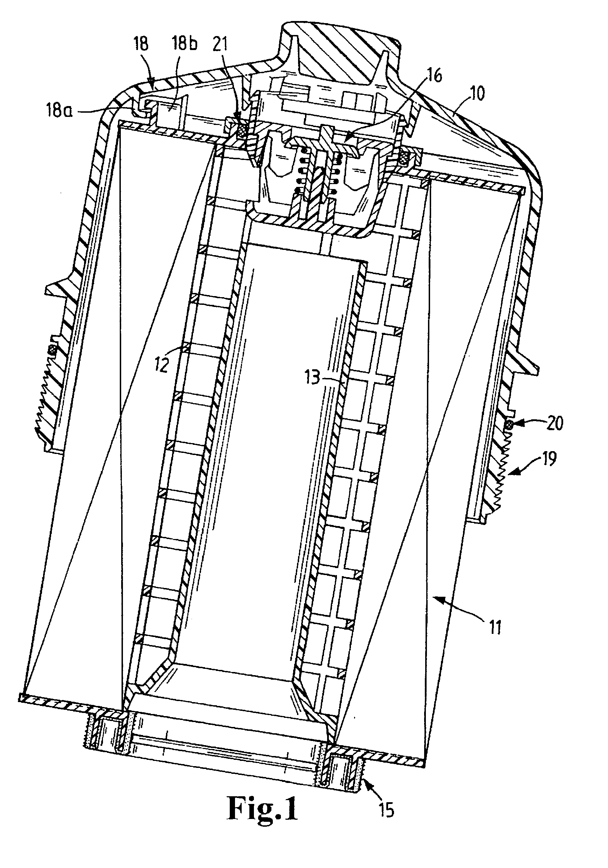

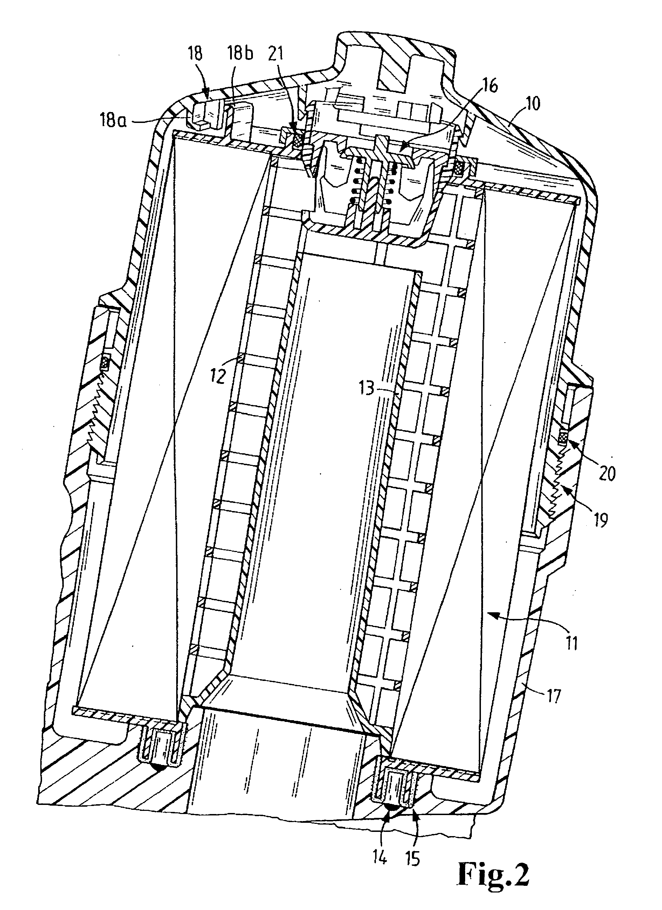

Fig. 1 zeigt ein im Filterdeckel 10 sitzendes Filterelement 11 mit integriertem Stützrohr 12. Ein solches Stützrohr 12 kann allerdings auch gehäusefest angeordnet sein. Innerhalb des Stützrohrs 12 ist ein Standrohr 13 angeordnet. Das Standrohr 13 verhindert beim Lösen des Filterelements 11 die Vermischung von Öl auf Roh- und Reinseite. Der Leerlaufkanal 14 (s. Fig. 2) ist durch eine doppelkonzentrische Abdichtung 15 sowohl von der Reinseite als auch von der Rohseite getrennt. Die doppelkonzentrische Dichtung 15 kann in einem Zweikomponentenverfahren, z.B. Spritzguss Hart-Weichkombination hergestellt sein. Ein Filterumgehungsventil 16 ist als Lebensdauerbauteil fest im Filterdeckel 10 verschnappt und öffnet bei einem Öffnungsdruck von etwa 2 bar, alternativ kann ein solches Filterumgehungsventil 16 auch im Filterelement 11 angebracht sein. Das Filterelement 11 ist in der Fig. 1 in der Position beim Abnehmen oder Einsetzen des Filterdeckels 10 in das Filtergehäuse 17 (s. Fig. 2) dargestellt und in der Bajonettbefestigung 18 verrastet. Der Filterdeckel 10 hat ein Sägegewinde 19 und dichtet radial gegen das Filtergehäuse 17 ab, in das er eingeschraubt werden kann. Als Dichtung 20 dient ein O-Ring, die bei Wechsel des Filterelements 11 in der Regel ausgetauscht wird. Die Abdichtung 21 zum Filterumgehungsventil 16 ist ebenfalls durch einen O-Ring realisiert, der durch einen Schnappring gesichert ist.

Fig. 2 zeigt den mit dem Filterelement 11 in das Filtergehäuse 17 eingeschraubten Filterdeckel 10. Durch die Reibung an der unteren Abdichtstelle 15 wird das Filterelement 11 beim Einschrauben des Filterdeckels 10 gegen die Drehbewegung abgebremst und die Bajonetthaken 18a lösen sich. Die Bajonetthaken 18a des Filterdeckels sind L-förmig ausgeführt und schlagen bei der Umdrehung mit ihrem vertikalen Bereich an die Rastungen 18b des Filterelements 11 an. Damit ist in Betrieb der pulsierende Deckel 10 vom Filterelement 11 entkoppelt und eine damit verbundene Relativbewegung von Filterelement 11 mit dem Gehäuse 17 wird vermieden. Durch die Gewindesteigung wandert der Filterdeckel 10 und damit auch das Filterelement 11 nach unten und dichtet die Leerlaufbohrung 14 an beiden konzentrischen Dichtstellen 15 ab.

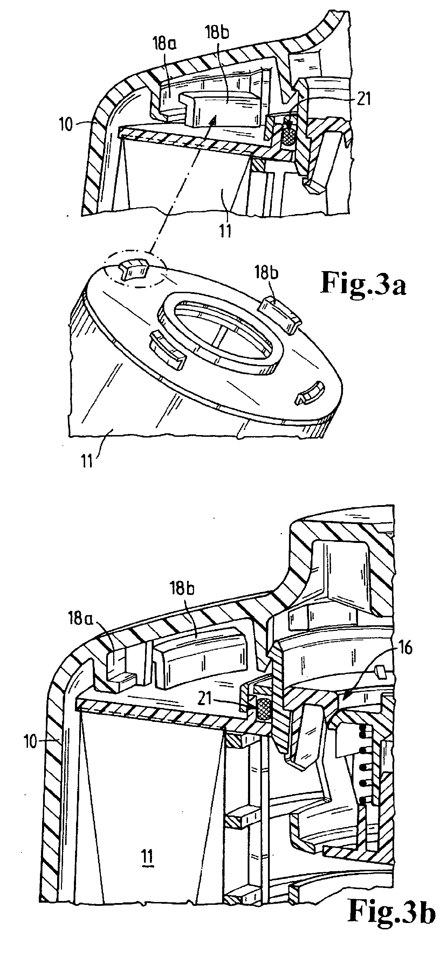

Fig. 3 a und b zeigen die Bajonettverrastung 18 im verriegelten bzw. im nichtverriegelten Zustand. Die Bajonettbefestigung 18 ist im eingebauten Zustand immer entkoppelt, damit beim Pulsieren keine Relativbewegung des Filterelements 11im Gehäuse 17 stattfindet. Pulsationen können z.B. durch die Ölpumpe, an deren Ölkreislauf der Ölfilter angeschlossen ist, entstehen.

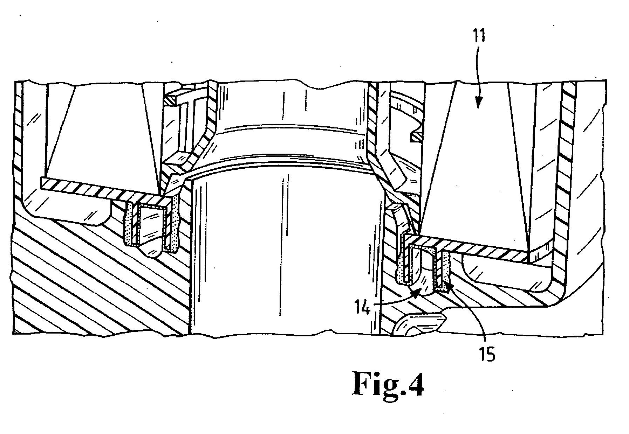

Fig. 4 zeigt, dass durch den Öldruck das Filterelement 11 immer nach unten, in den Dichtsitz der doppelkonzentrischen Dichtung 15 gedrückt wird. Das kreisförmige Leerlaufsegment 14 ist im Betrieb drucklos, wodurch der Differenzdruck zum Ölkreislauf entsteht.

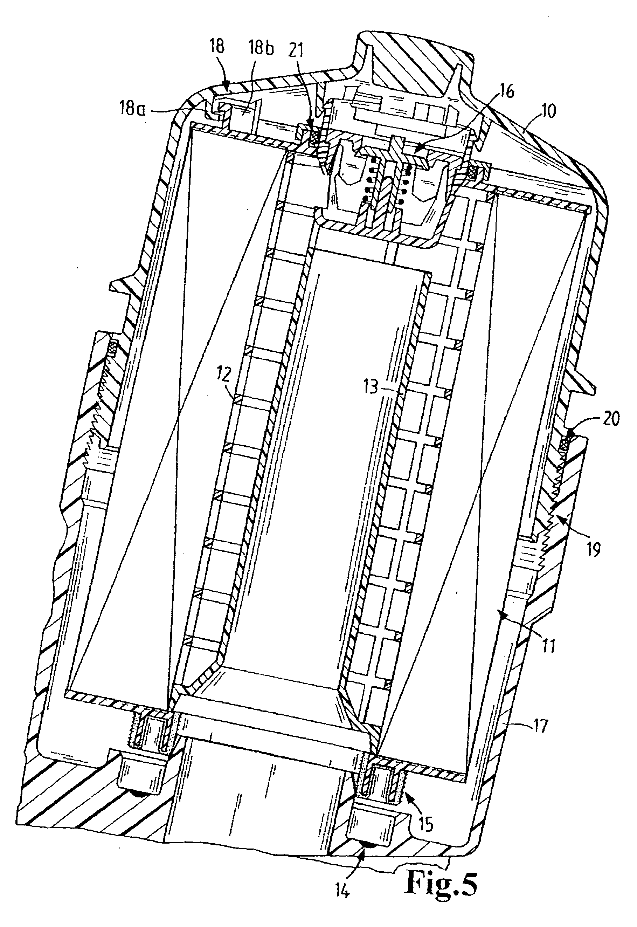

In Fig. 5 ist die Ausbausituation dargestellt. Beim Abschrauben des Filterdeckels 10 erzeugen etwa 4 Umdrehungen einen Hub von etwa 12 mm. Durch die Reibung an der unteren Abdichtstelle 15 finden beim Abschrauben des Filterdeckels 10 die Verriegelungen 18b am Filterelement 11 in die entsprechenden Bajonetthaken 18a am Deckel 10 und werden von diesen mitgenommen. Durch die Gewindesteigung wandert das Filterelement 11 nach oben und gibt die Abdichtung zur Rohseite frei. Die Reinseite bleibt hierbei noch durch die innere der doppelkonzentrischen Dichtungen 15 abgedichtet. Die Rohseite kann hierdurch leerlaufen. Beim weiteren Abschrauben wird auch die innere Abdichtung der doppelkonzentrischen Dichtung 15 gelöst und die Reinseite kann leer laufen. Ein Vermischen von Rohöl und Reinöl wird vermieden. Durch das innere Standrohr 13 kann vermieden werden, das Öl aus dem Filterinneren herabtropft.

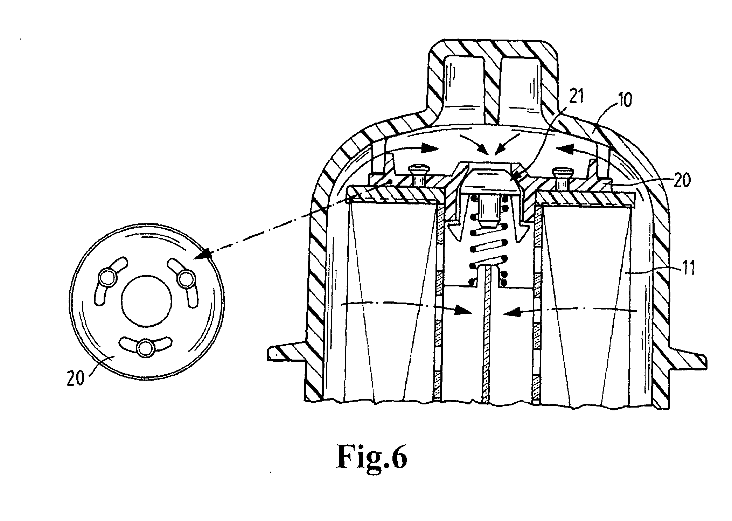

Fig. 6 zeigt ein Filterumgehungsventil, das in den Filter der Figuren 1 bis 5 integriert werden kann, das aber auch in anderen Ausführungsformen eines Öl- oder Kraftstofffilters denkbar ist. Wenn das Filterelement 11 mittels Bajonettverschluss in eine im Deckel 10 fest eingebrachte Bajonettplatte 20 befestigt ist - in einer bevorzugten Ausführungsform ist diese Befestigung mit Spiel in einer anderen Ausführungsform ohne Spiel ausgeführt -, bildet sich die vollständige Ventilfunktion aus. Der Ventilkegel 21, der am Filterelement 11 befestigt ist, dichtet auf der Bajonettplatte 20 im Filterdeckel 10 ab.

## Patentansprüche

1. Flüssigkeitsfilter, insbesondere Ölfilter für ein Kraftfahrzeug, umfassend
a. ein Filtergehäuse (17) mit
i. einem ersten Gewinde und
ii. einem Leerlaufkanal (14)
b. einen Filterdeckel (10) mit
i. einem zweiten Gewinde (19) zur Befestigung des Filterdeckels (10) am Gehäuse (17);
ii. einem Filterumgehungsventil (16) zur Umgehung eines Filterelements (11) bei zu hohem Druckverlust beim Durchtritt der Flüssigkeit durch ein Filtermedium des Filterelements (11);
iii. ersten Bajonettverbindungen (18a);
c. das Filterelement (11) mit
i. dem Filtermedium;
ii. zweiten Bajonettverbindungen (18b) zur Befestigung des Filterelements (11) am Filterdeckel (10), wobei die ersten und zweiten Bajonettverbindungen (18a und 18b) so aufeinander abgestimmt sind, dass das Filterelement in den Filterdeckel (10) eingesetzt werden kann, so dass die ersten Bajonettverbindungen (18a) mit den zweiten Bajonettverbindungen (18b) verriegeln;
**gekennzeichnet dadurch, dass**
das Filterelement (11) eine doppelkonzentrischen Dichtung (15) zum Verschluss des Leerlaufkanals (14) umfasst, wobei die Bajonettverbindungen (18a, 18b) leichter gängig sind als der Reibschluss durch die doppelkonzentrische Dichtung (15) zum Verschluss des Leerlaufkanals (14), so dass die Bajonettverbindungen (18a, 18b) sich beim Anschrauben des Filterdeckels (10) zusammen mit dem über die Bajonettverbindungen (18a, 18b) befestigten Filterelement (11) im Filterdeckel (10) lösen.

2. Rundfilterelement für den Flüssigkeitsfilter nach Anspruch 1 (11) mit einem Filtermedium, zweiten Bajonettverbindungen (18b) zur Befestigung des Filterelements (11) an einem Filterdeckel (10) **gekennzeichnet durch** eine doppelkonzentrischen Dichtung (15) zum Verschluss eines Leerlaufkanals (14).

## Claims

1. Liquid filter, in particular oil filter for a motor vehicle, comprising:
a. a filter housing (17) with
i. a first thread and
ii. an idle duct (14)
b. a filter cover (10) with
i. a second thread (19) for attaching the filter cover (10) at the housing (17);
ii. a filter bypass valve (16) for bypassing a filter element (11) when the pressure loss is too important while the liquid flows through a filter medium of the filter element (11);
iii. first bayonet connections (18a);
c. the filter element (11) with
i. the filter medium;
ii. second bayonet connections (18b) for attaching the filter element (11) at the filter cover(10), the first and the second bayonet connections (18a and 18b) being harmonized such that the filter element can be inserted into the filter cover (10) so that the first bayonet connections (18a) are locked with the second bayonet connections (18b);
**characterized in that**
the filter element (11) comprises a double-concentric sealing (15) for closing the idle duct (14), the bayonet connections (18a, 18b) being easier to operate than the friction locking due to the double-concentric sealing (15) for closing the idle duct (14) so that the bayonet connections (18a, 18b) come loose in the filter cover (10) together with the filter element (11) which is attached by means of the bayonet connections (18a, 18b) when the filter cover (10) is screwed.

2. Round filter element for the liquid filter according to claim 1 (11), with a filter medium, two bayonet connections (18b) for attaching the filter element (11) to a filter cover (10), **characterized by** a double-concentric sealing (15) for closing an idle duct (14).

## Revendications

1. Filtre à liquide, notamment filtre à huile pour un véhicule automobile, comprenant
a. un boîtier de filtre (17) avec
i. un premier filet et
ii. un canal de marche à vide (14)
b. un couvercle de filtre (10) avec
i. un deuxième filet (19) destiné à fixer le couvercle de filtre (10) au boîtier (17);
ii. une soupape de dérivation de filtre (16) permettant de contourner un élément filtrant (11) en cas de perte excessive de pression lors du passage du liquide à travers un milieu filtrant de l'élément filtrant (11);
iii. des premiers joints baïonnette (18a);
c. l'élément filtrant (11) avec
i. le milieu filtrant;
ii. des deuxièmes joints baïonnette (18b) destinés à fixer l'élément filtrant (11) sur le couvercle du filtre (10), les premiers et deuxièmes joints baïonnette (18a et 18b) étant adaptés les uns aux autres de manière à ce que l'élément filtrant puisse être inséré dans le couvercle du filtre (10), de sorte que les premiers joints baïonnette (18a) verrouillent avec les deuxièmes joints baïonnette (18b);
**caractérisé en ce que**
l'élément filtrant (11) comprend un joint doublement concentrique (15) destiné à obturer le canal de marche à vide (14), les joints baïonnette (18a, 18b) étant plus facilement mobiles que l'assemblage par friction résultant du joint doublement concentrique (15) destiné à obturer le canal de marche à vide (14), de sorte que, lors du vissage du couvercle de filtre (10), les joints baïonnette (18a, 18b) se détachent dans le couvercle du filtre (10), avec l'élément filtrant (11) fixé au moyen des joints baïonnette (18a, 18b).

2. Elément filtrant rond pour le filtre à liquide selon la revendication 1 (11) avec un milieu filtrant, des deuxièmes joints baïonnette (18b) destinés à fixer l'élément filtrant (11) sur un couvercle de filtre (10), **caractérisé par** un joint doublement concentrique (15) destiné à obturer le canal de marche à vide (14).
